Europäisches Patentamt

(19) European Patent Office

Office européen des brevets

(11) Veröffentlichungsnummer: **0 111 745**
**A1**

(12) **EUROPÄISCHE PATENTANMELDUNG**

(21) Anmeldenummer: **83111328.7**

(22) Anmeldetag: **12.11.83**

(51) Int. Cl.³: **B 65 G 47/51**

(30) Priorität: **15.12.82 CH 7304/82**

(43) Veröffentlichungstag der Anmeldung:
**27.06.84 Patentblatt 84/26**

(84) Benannte Vertragsstaaten:
**AT BE CH DE FR GB IT LI LU NL SE**

(71) Anmelder: **Montech AG**
**Gewerbestrasse 12**
**CH-4552 Derendingen(CH)**

(72) Erfinder: **Füeg, Theodor**
**Schmiedengasse 2**
**CH-4710 Balsthal(CH)**

(72) Erfinder: **Allemann, Kurt**
**Dahlienstrasse 9**
**CH-4533 Riedholz(CH)**

(74) Vertreter: **Rottmann, Maximilian**
**Hug Interlizenz AG Alte Zürcherstrasse 49**
**CH-8903 Birmensdorf/ZH(CH)**

(54) Vorrichtung zur Zwischenspeicherung von Werkstücken sowie Werkstückträger zur Verwendung mit der Vorrichtung.

㉗ Der Zwischenspeicher oder Puffer (4) wird zwischen zwei Montagemaschinen angeordnet. Er ermöglicht die Zwischenspeicherung von Werkstückträgern, falls zum Beispiel die erste Montagemaschine mehr liefert als die zweite verarbeiten kann. Es wird auch ein Weiterarbeiten der zweiten Maschine ermöglicht, falls die erste während einer gewissen Zeitspanne ausfällt. Der Zwischenspeicher umfasst ein Gestell (5) mit einem darauf befindlichen Rahmen (15) zur Führung des die Werkstückträger (7) enthaltenden Kassettenblockes (6). Durch vertikale Führungsstäbe (29) wird der Kassettenblock in mehrere Kassetten (28) eingeteilt. Mit an einem Hebezylinder (13) befestigten Hebefingern (11) werden die Werkstückträger (7) von einem Förderband (3) in den Kassettenblock (6) eingebracht, respektive aus demselben entnommen. An Verriegelungsstangen (27) sind Verriegelungsbolzen (39) zur Arretierung der Werkstückträger im Kassettenblock vorgesehen. Der Werkstückträger (7) umfasst an einem Rahmen (40) angeordnete Arretiervorrichtungen (44), in welche die Verriegelungsbolzen eingreifen. Ein am Rahmen (40) montierter Metallstreifen (46) dient zur Anzeige ob ein Werkstückträger vorhanden ist oder nicht. Ein Kodierschieber (49) zeigt je nach seiner Lage in einer Führung (47) an, welcher Werkstücktyp im Werkstückträger vorhanden ist.

FIG. 3

FIG. 6

Vorrichtung zur Zwischenspeicherung von Werkstücken
sowie Werkstückträger zur Verwendung mit der Vorrichtung
------------------------------------------------------------

Die vorliegende Erfindung bezieht sich auf eine Vorrichtung zur
Zwischenspeicherung von in Werkstückträgern angeordneten Werkstücken, die ein Speichermittel sowie ein Hebemittel zum Einbringen von Werkstückträgern von einem Förderband in das Speichermittel bzw. zur Entnahme von Werkstückträgern aus dem
Speichermittel und zur Verbringung derselben auf das Förderband
umfasst. Ferner bezieht sich die Erfindung auf einen Werkstückträger zur Verwendung mit der Vorrichtung.

Werden Werkstücke z.B. von einer ersten Bearbeitungsmaschine zu
einer zweiten Bearbeitungsmaschine transportiert, so führt eine
Störung der ersten Maschine auch zu einem Stillstand der zweiten Maschine, falls kein Zwischenspeicher oder Puffer zwischen den beiden Maschinen vorgesehen ist. Mit einem Zwischenspeicher oder Puffer zwischen den beiden Maschinen ist jedoch ein Weiterarbeiten der zweiten Maschine auch dann möglich, wenn die erste Maschine eine Störung aufweist, indem zwischengespeicherte Werkstücke aus dem Puffer entnommen werden. Falls die zweite Maschine eine Störung aufweist, kann die erste Maschine in den Zwischenspeicher oder Puffer arbeiten.

Aus diesen Überlegungen heraus sind Vorrichtungen zur Zwischenspeicherung von Werkstücken bekannt, die auch Puffer genannt werden und bei denen die in Werkstückträgern aufgenommenen Werkstücke in einer einzigen Ebene gespeichert werden. Bei diesen bekannten Puffern besteht die Schwierigkeit, gespeicherte Werkstücke an beliebiger Stelle herauszunehmen bzw. auszupuffern, falls die Werkstücke verschieden voneinander sind.

Ein Puffer der gattungsgemässen Art ist in der CH-PS Nr. 523 831 beschrieben. Am Anfang und am Ende einer bei dieser Vorrichtung vorgesehenen Bearbeitungsstrasse sind Pufferzonen vorhanden, welche zugeführte, zu bearbeitende Werkstücke bzw. bearbeitete, abzuführende Werkstücke aufnehmen. Um grössere Pufferkapazitäten zu schaffen, schlägt die genannte Patentschrift vor, dass ein Aufeinanderstapeln von Werkstückträgern erfolgt; während der Zufuhr von zu bearbeitenden Werkstückträgern an der Eingangsseite der Bearbeitungsstrasse bzw. während der Zufuhr von bearbeiteten Werkstücke von der Ausgangsseite der Bearbeitungsstrasse können Werkstückträger-Stapel gebildet werden. Allerdings handelt es sich dabei immer um die gleiche Art von Werkstücken, und es ist auch keine Möglichkeit vorgesehen, selektiv auf bestimmte Werkstücke bzw. Werkstückträger zuzugreifen.

Es ist eine Aufgabe der vorliegenden Erfindung, eine Vorrichtung zur Zwischenspeicherung von Werkstücken zu schaffen, welche es ermöglicht, Werkstücke auch verschiedener Art typweise zu puffern, mit der Möglichkeit, selektiv auf einen bestimmten Werkstücktyp zurückgreifen zu können. Diese erfindungsgemässe Aufgabe wird bei einer Vorrichtung der eingangs erwähnten Art durch die im kennzeichnenden Teil des Patentanspruches 1 definierten Merkmale gelöst.

Im weiteren ist es eine Aufgabe der vorliegenden Erfindung, einen Werkstückträger zur Verwendung mit einer Vorrichtung zum Zwischenspeichern von Werkstücken der in den Ansprüchen beschriebenen Art zu schaffen; dieser zeichnet sich gemäss der Erfindung durch die kennzeichnenden Merkmale des unabhängigen Patentanspruches 6 aus. Vorzugsweise soll dabei festgestellt werden können, ob ein Werkstückträger im Zwischenspeicher vorhanden und welcher Werkstücktyp in einem bestimmten Werkstückträger aufgenommen ist.

Im folgenden werden anhand der beiliegenden Zeichnung Ausführungsbeispiele der Erfindung und deren Verwendung näher beschrieben. Es zeigen:

Fig. 1 eine schematische Darstellung zweier Montagemaschinen mit den dazwischenliegenden Vorrichtungen zum Zwischenspeichern von Werkstückträgern,

Fig. 2 eine perspektivische Ansicht der Vorrichtung zum Zwischenspeichern von Werkstückträgern mit dem Zuführband und einem Handgabel-Hubwagen zum Zubringen der Kassettenblöcke zur Speichervorrichtung,

Fig. 3 eine Ansicht der Vorrichtung zum Zwischenspeichern von Werkstückträgern,

Fig. 4 eine Draufsicht auf die Vorrichtung gemäss Fig. 3,

Fig. 5 einen Schnitt gemäss Linie V-V der Fig. 4,

Fig. 6 eine perspektivische Ansicht eines Werkstückträgers,

Fig. 7 eine Teilansicht der Vorrichtung gemäss Fig. 3 in vergrössertem Massstab,

-4-

Fig. 8 einen Schnitt gemäss Linie VIII-VIII der Fig. 7 und

Fig. 9 das Zentrierrad für den Kassettenblock in der Speichervorrichtung.

Fig. 10 eine weitere Verwendungsmöglichkeit der Speichervorrichtung.

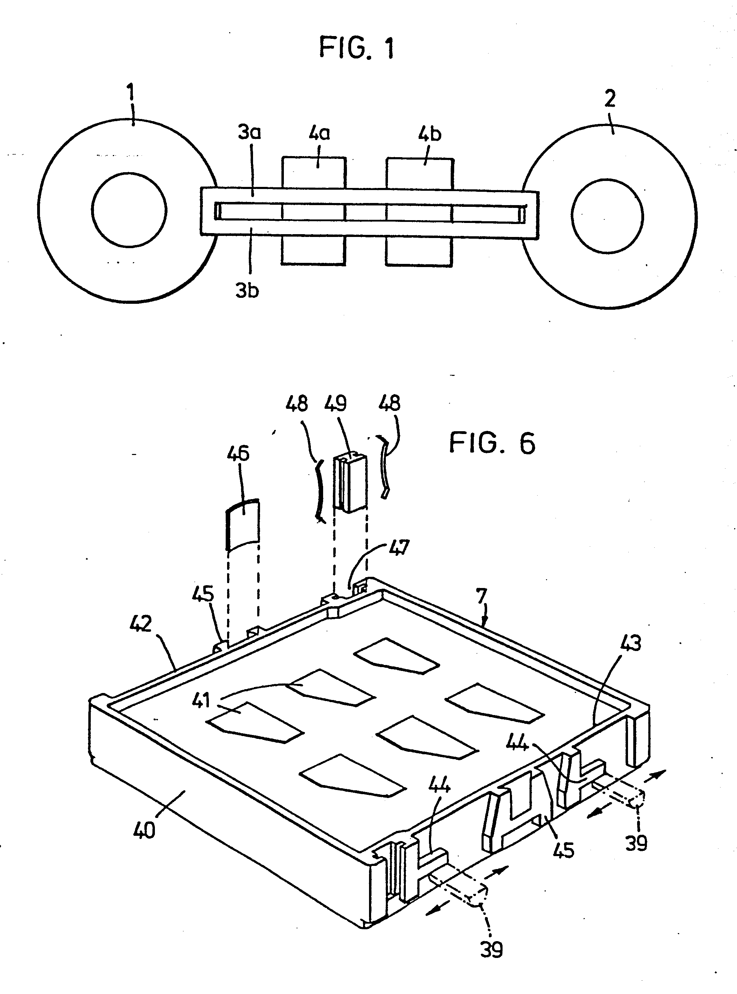

In der Fig. 1 sind zwei Montagemaschinen 1 und 2 dargestellt, welche mit zwei Förderbändern 3a und 3b verbunden sind. Zwischen den Montagemaschinen sind zwei Vorrichtungen zum Zwischenspeichern von leeren und vollen Werkstückträgern 4a und 4b, im folgenden auch Puffer genannt, angeordnet. Die z. B. in der Montagemaschine 1 bearbeiteten Werkstücke werden auf Werkstückträgern auf das Förderband 3a gebracht und im Puffer 4a gespeichert. Zur Montagemaschine 2 gelangen die Werkstücke entweder direkt von der Montagemaschine 1 oder vom Puffer 4a auf dem Förderband 3a. Die leeren Werkstückträger gelangen von der Maschine 2 über das Förderband 3b entweder direkt zur Maschine 1 oder in den Puffer 4b.

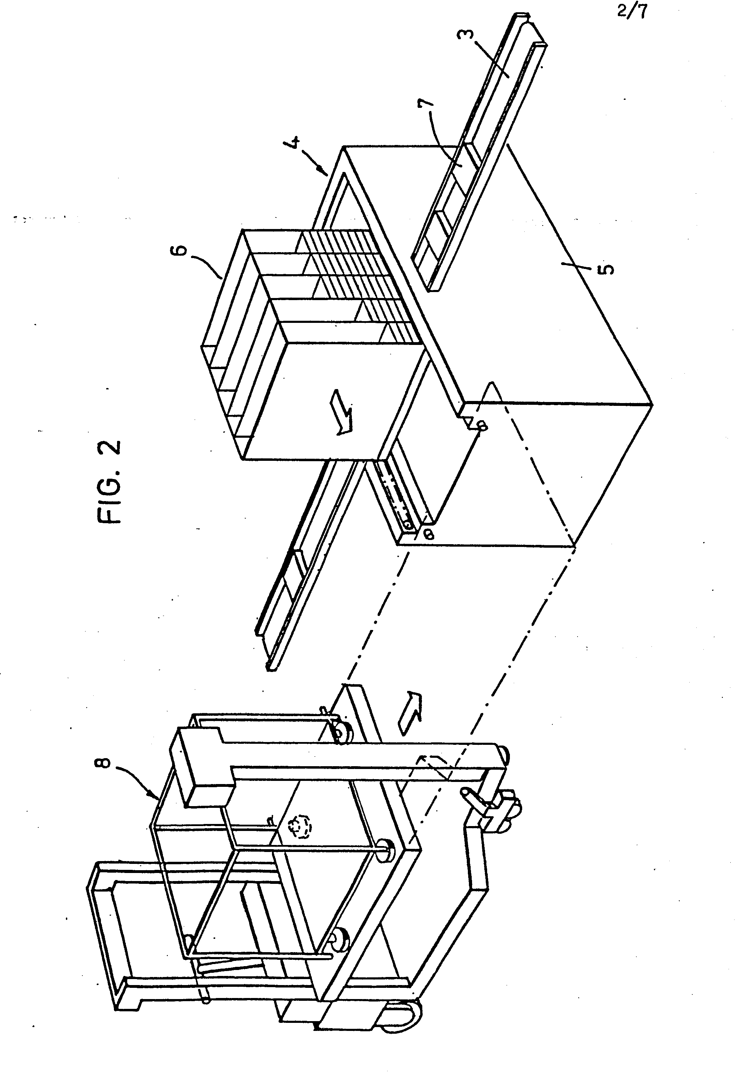

In Fig. 2 ist der Puffer 4 perspektivisch dargestellt. Dieser umfasst im wesentlichen ein Gestell 5 mit einem darauf montierbaren Kassettenblock 6. Ueber das Förderband 3 werden die Werkstückträger 7 dem Kassettenblock 6 zugeführt. Im weiteren ist in Fig. 2 noch ein Handgabel-Hubwagen 8 schematisch dargestellt, der zum Zu- oder Wegführen der Kassettenblöcke dient.

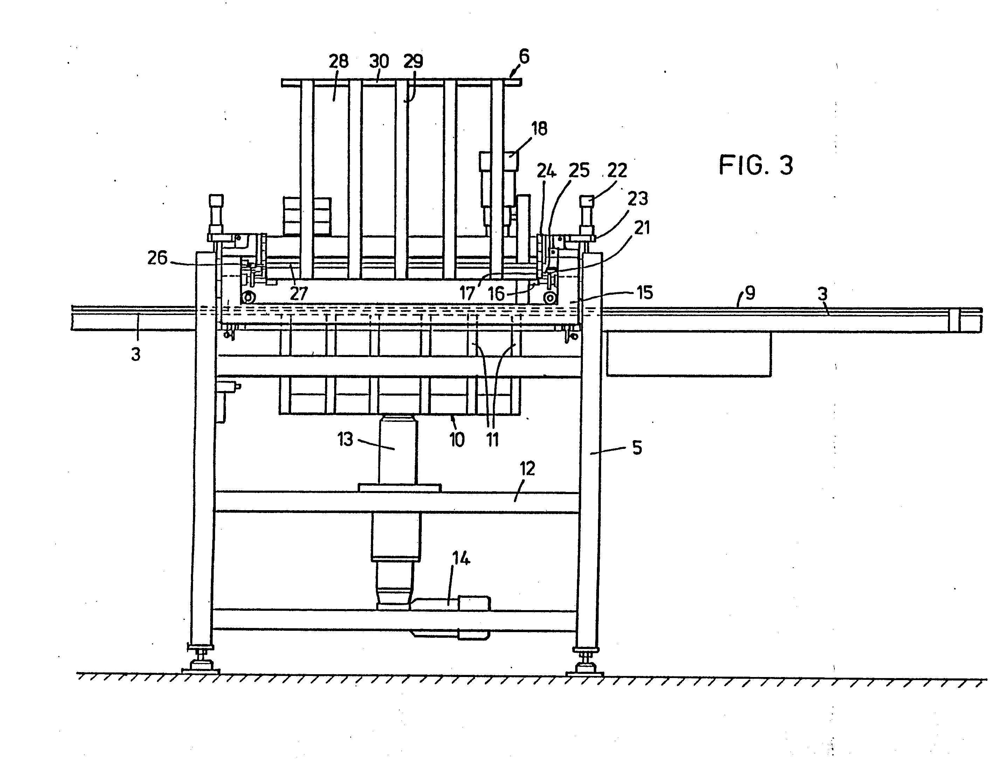

Fig. 3 zeigt eine Ansicht des Puffers mit dem auf dem Gestell 5 aufgesetzten Kassettenblock und dem Förderband 3. Das Förderband 3 ist in einer Führungsbahn 9 geführt. Unterhalb des Transportbandes ist eine Hebebühne 10 mit Fingern 11 vorgesehen, die zum Speichern der auf dem Transportband zugeführten Werkstückträger im Kassettenblock oder zur Entnahme von Werkstückträgern aus dem Kassettenblock und zur Verbringung derselben auf das Transportband dient. Im Gestell 5 ist eine Tragbühne 12 mit einem elektrischen Spindelhubwerk 13,14 vorgesehen, wobei mit 14 der Motor dargestellt ist. Eine ebenfalls im Gestell 5 vorgesehene Antriebsvorrichtung 14 dient zur vertikalen Verschiebung des Hebezylinders 13. Mit dem elektrischen Spindelhubwerk 13,14 wird die Hebebühne 10 vertikal nach oben oder nach unten verschoben. Der Kassettenblock wird auf einem Rahmen 15 mit Rollen 16 und 17 vor- und rückwärts bewegt. Der Antrieb für die Vor- und Rückwärtsbewegung des Kassetten blocks erfolgt über einen Antriebsmotor 18 und zwei Ketten 19 und 20. Die Ketten sind auf Kettenrädern 21 geführt. Ein von einem Arretierkolben 22 betätigter Positionierungsarm 23 greift zur genauen Positionierung des Kassettenblockes auf dem Rahmen in ein am Rahmen befestigtes Zentrierrad 24 ein. An den Rollen 17 sind jeweils Mitnehmer 25 vorgesehen, die zur Uebertragung der Kettenbewegung auf dem Kassettenblock dienen. Mit einem Steuerzylinder 26 werden Verriegelungsstangen 27 bedient, welche zur Arretierung der Werkstückträger in den einzelnen Kassetten 28 des Kassettenblockes 6 dienen. Der Kassettenblock 6 umfasst vertikale Führungsstäbe 29 für die Werkstückträger sowie am oberen Ende des Kassettenblockes angeordnete horizontale, die Führungsstäbe verbindende Träger 30.

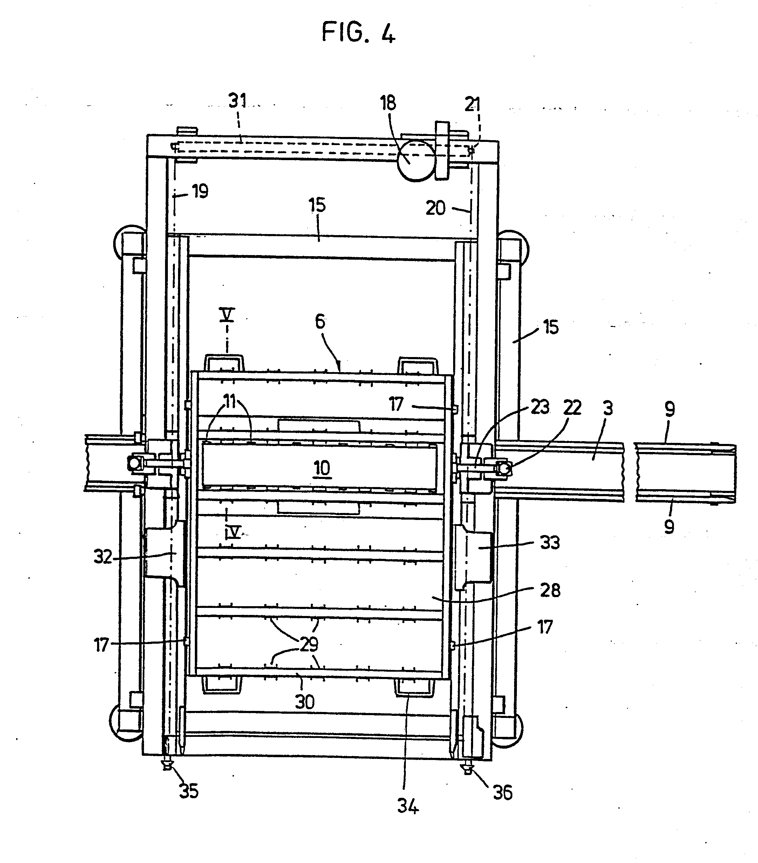

In Fig. 4 ist eine Draufsicht auf den Puffer dargestellt. Die Führungsstäbe sind in sechs parallel zum Transportband angeordneten Reihen vorgesehen, wobei jede Reihe fünf Führungsstäbe 29 umfasst. Die Werkstückträger werden jeweils in der Mitte an den Führungsstäben 29 geführt. Aus der Fig. 4 ist im weiteren noch eine die Ketten 19 und 20 verbindende, vom Antriebsmotor 18 angetriebene Verbindungsachse 31 ersichtlich. Seitlich vom Förderband 3 sind die Hebefinger 11 zum Einpuffern oder Auspuffern der Kassetten vom Förderband 3 in den Kassettenblock, respektive vom Kassettenblock auf das Förderband ersichtlich. Der Kassettenblock 6 umfasst fünf parallel zum Förderband 3 angeordnete Kassetten 28. Seitlich am Kassettenblock sind zwei Kippsicherungen 32 und 33 vorgesehen. Der Kassettenblock ist unten an seinen Breitseiten je mit zwei Traggriffen 34 ausgerüstet.

An der Frontseite des Puffers sind Zentriervorrichtungen 35 und 36 vorgesehen, welche beim Zubringen der Kassettenblöcke oder der Entnahme derselben durch den Handgabel-Hubwagen eine Ausrichtung der Positionierflächen für die Kassettenblöcke ermöglichen.

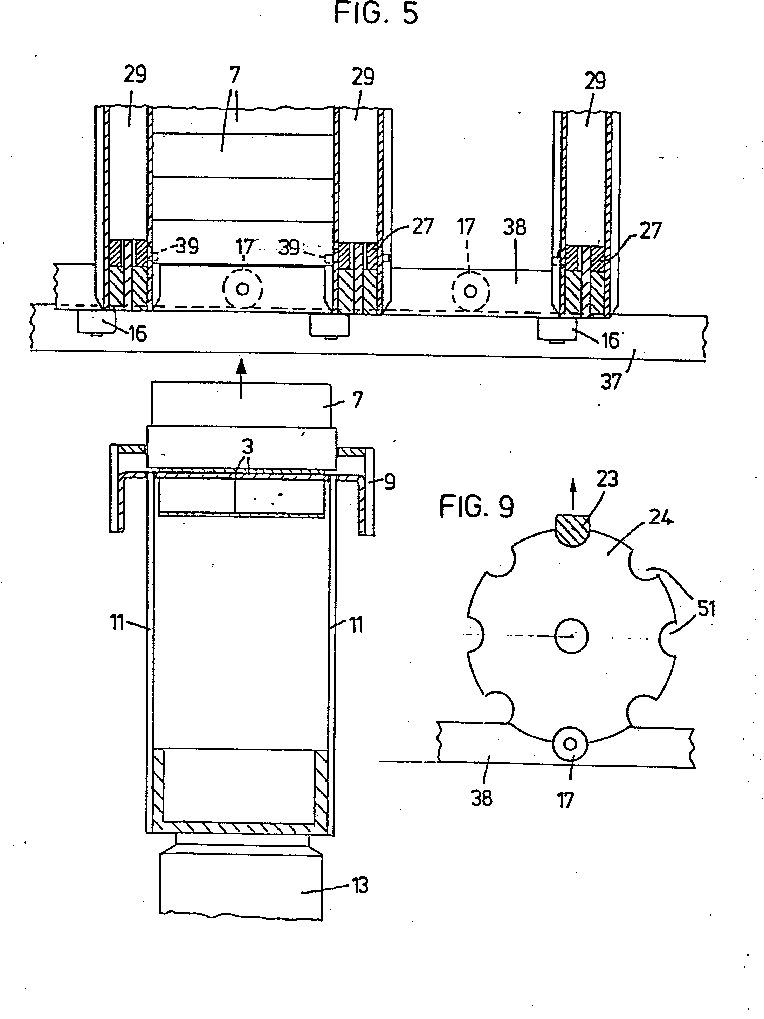

In Fig. 5 ist ein Schnitt gemäss der Linie V-V der Fig. 4 dargestellt. Aus dieser Figur ist deutlich ersichtlich, wie die vom Hebezylinder 13 vertikal nach oben, respektive nach unten bewegbaren Hebefinger 11 neben dem Transportband 3 zum vertikalen Verschieben der Werkstückträger 7 geführt sind. Der Kassettenblock wird mit seinen Rollen 16 und 17 auf den beiden Schienen 37 und 38 quer zum Transportband hin- und herbewegt. Die Verriegelungsstangen 27 zum Arretieren der Werkstückträger zwischen den vertikalen Führungsstäben sind mit Verriegelungsbolzen 39 versehen.

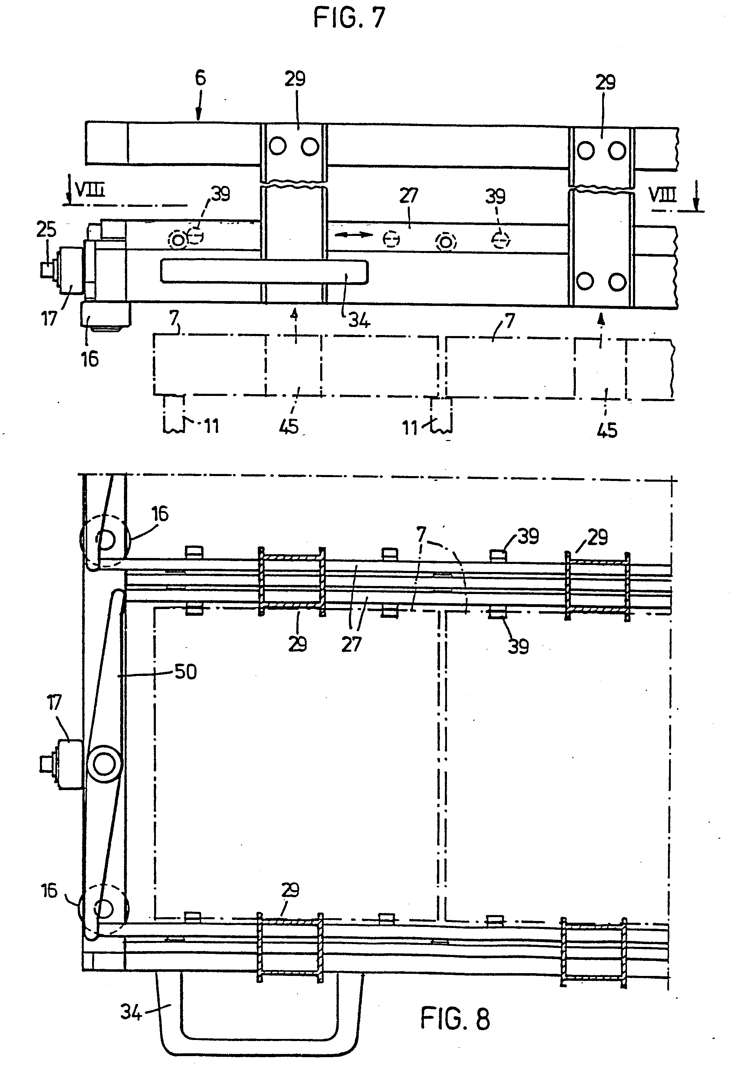

In Fig. 6 ist ein Ausführungsbeispiel eines Werkstückträgers perspektivisch dargestellt. Der Werkstückträger umfasst im wesentlichen einen Rahmen 40, innerhalb welchem die einzelnen Werkstücke 41 angeordnet sind. Der Werkstückträger weist an zwei gegenüberliegenden Seitenflächen 42 und 43 des Rahmens Arretiervorrichtungen 44 auf, in welche bei der Speicherung der Werkstückträger im Kassettenblock die Verriegelungsbolzen 39 eingreifen. In der Mitte der Seitenflächen 42 und 43 sind Führungsteile 45 vorgesehen, mit welchen der Werkstückträger an den vertikalen Führungsstäben 29 des Kassettenblockes geführt wird. Mindestens in einem Führungsteil 45 ist ein Metallteil 46 vorgesehen, welcher in einer Erfassungsvorrichtung des Puffers die Anwesenheit oder Nichtanwesenheit eines Werkstückträgers meldet. In einer Nut 47 ist im weiteren mit zwei Federn 48 ein Kodierungsschieber 49 befestigt. Es kann auch ein zweiter Kodierungsschieber diagonal auf der gegenüberliegenden Seite vorgesehen sein. Der Kodierungsschieber besteht aus einer im Werkstückträger senkrecht verschiebbaren Metallplatte. Je nach der Lage des Kodierungsschiebers 49 in der Nut 47 wird der Erfassungseinheit des Puffers angezeigt, ob z. B. ein Werkstücktyp A oder ein Werkstücktyp B im Werkstückträger befindlich ist. Mit einem eventuellen zweiten Schieber kann noch ein Typ C oder D definiert werden. Durch Kombination der Positionen der beiden Schieber können vier Typen definiert werden. Beim Wechseln des Werkstücktypes muss die Kodierung geändert werden, was durch einen über einen nicht dargestellten Wahlschalter gesteuerten, ebenfalls nicht dargestellten, Verschiebezylinder geschieht. Da z. B. die Werkstücktypen A in den drei ersten Kassetten und die Werkstücktypen B in den zwei letzten Kassetten gespeichert werden, muss der Puffer erkennen können, von wann an ein neuer Werkstücktyp eingepuffert werden muss. Dies geschieht mit dem oben beschriebenen Kodierungsschieber.

Fig. 7 zeigt eine Teilansicht in grösserem Massstab des Kassettenblockes.

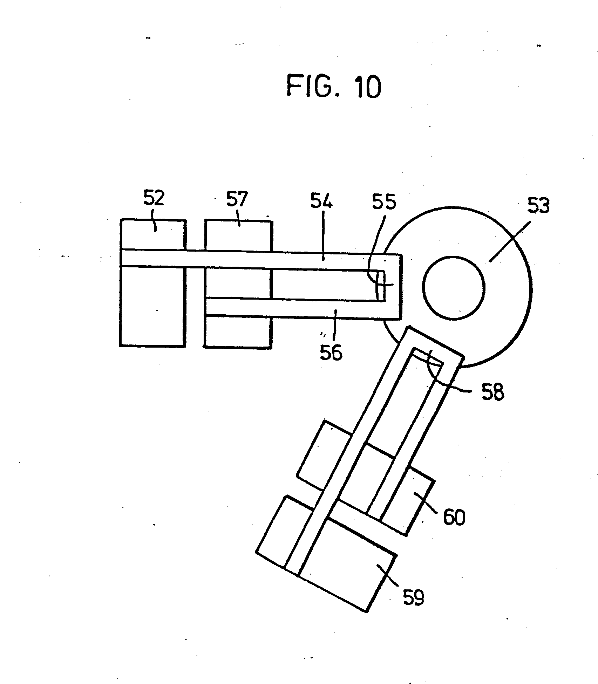

In Fig. 8 ist ein Schnitt gemäss Linie VIII-VIII der Fig. 7 dargestellt. Mit einem Verriegelungshebel 50 werden die Verriegelungsstangen 27 seitlich verschoben, wobei die Verrieglungsbolzen 39 jeweils in oder ausser Eingriff mit den Arretiervorrichtungen 44 der Werkstückträger gelangen. Der Verriegelungshebel, die Verriegelungsstange sowie die Verriegelungszapfen sind jeweils nur für die untersten Reihen von fünf Werkstückträgern einer Kassette vorgesehen. Es werden also immer fünf Werkstückträger vom Transportband 3 aus gemeinsam in eine Kassette des Kassettenblockes eingeführt, respektive von dieser entnommen.

In Fig. 9 ist das Zentrierrad 24 dargestellt. Beim Einschieben des Kassettenblockes in den Rahmen 15, greifen die am Kassettenblock befestigten Rollen 17 jeweils in Ausnehmungen 51 des am Rahmen 15 befestigten Zentrierrades 24 ein, wobei das Zentrierrad gedreht wird. Ist der Kassettenblock einmal grob im Rahmen 15 zentriert, so greift der Positionierungsarm 53 in die oberste Ausnehmung 51 ein und bewirkt, falls der Kassettenblock noch nicht genau zentriert ist, eine kleine Verdrehung des Zentrierrades, was wiederum eine kleine Verschiebung des Kassettenblockes im Rahmen zur Folge hat.

Im folgenden soll nun noch der Vorgang der Einführung der Werkstückträger in den Kassettenblock, respektive die Entnahme desselben, was auch als Einpufferung, respektive Auspufferung bezeichnet wird, beschrieben werden. Die Werkstückträger werden in der Regel einzeln auf dem Transportband in Einpufferungsposition unter den Kassettenblock gebracht. Zwei quer zur Bandrichtung bewegliche Anschläge bremsen den zuerst ankommenden Werkstückträger in der Art, dass die Zentriergeometrie des Werkstückträgers mit derjenigen des Kassettenblockes übereinstimmt. Durch die genauen Aussenmasse des Werkstückträgers stimmen nun automatisch auch die Zentrierformen der folgenden Werkstückträger, welche auf dem Band ankommen, mit den Kassettenblockprofilen überein. Wenn nun fünf Werkstückträger in Einpufferungsposition liegen, wird vom sechsten Werkstückträger der Einpufferungsvorgang ausgelöst, indem der Hebezylinder 13 mit den Hebefingern 11 durch eine vertikale Hubbewegung die fünf Werkstückträger vom Band abhebt und in den Kassettenblock einschiebt.

Bei diesem Vorgang müssen die Verriegelungsstangen 27 so bewegt werden, dass die Werkstückträger ungehindert an den Verriegelungsbolzen 39 vorbeifahren können. Zu diesem Zweck sind an der Aussenform der Werkstückträger entsprechende Aussparungen angebracht. Der Einschubvorgang ist beendet, wenn die beiden Verriegelungsstangen 27 die Schliessbewegung unter den Werkstückträgern ausführen können. Bei der darauf folgenden Abwärtsbewegung des Hebezylinders 13 mit den Hebefingern 11 bleiben die fünf Werkstückträger auf den Verriegelungsbolzen liegen. Sobald nun die Hebefinger 11 mit ihrer Oberkante unter das Förderbandniveau gefahren sind, können weitere Werkstückträger in Einpufferungsposition gebracht werden.

Bei den folgenden Einpufferungsvorgängen werden mit dem Einschieben der neuen fünf Werkstückträger jeweils die darüberliegenden Werkstückträger-Lagen mit angehoben, bis der ganze Kassettenblock in seiner ganzen Höhe gefüllt ist.

Sobald ein Signal "Kassette gefüllt" an die Steuerung geht, wird der ganze Kassettenblock um eine Kassette verschoben und zwar derart, dass die Zentriergeometrie der zweiten Kassette genau mit derjenigen der bereitstehenden Werkstückträger auf dem Band übereinstimmt. Nun kann der Einpufferungsvorgang weitergehen, bis auch bei der zweiten Kassette das Signal "Kassette gefüllt" an die Steuerung geht. Der Füllvorgang der Kassette hält solange an, wie die dem Puffer nachgeschaltete Montagemaschine keinen Bedarf an gefüllten Werkstückträgern hat. Sollte dies der Fall sein, so transportiert das Band die Werkstückträger direkt zur folgenden Maschine ohne Ein- und Auspufferungsvorgang. Ist der Bedarf gefüllter Werkstückträger an der dem Puffer nachgeschalteten Maschine grösser als der Ausstoss der dem Puffer vorgeschalteten Maschine, so werden Werkstückträger aus dem Puffer entnommen.

Bei vielen Montageaufgaben kommt es vor, dass trotz gleicher Aussenform gewisse Kenngrössen an Werkstücken verschieden sein können. Vom Montageautomaten her steht die Verarbeitung derart verschiedener Teile nichts im Weg. Der Anwender jedoch hat das Problem, dass nur ein Typ nach dem andern verarbeitet werden kann, damit keine Verwechslungsgefahr entsteht. Dies bedeutet ohne entsprechende Vorkehrungen, dass die Maschinen leergefahren werden müssen, bevor ein neuer Typ darauf verarbeitet werden kann.

Montageautomaten sind Anlagen von extrem hohem Beschaffungswert. Der Anwender ist deshalb bemüht, eine möglichst hohe Nutzungsziffer dieser Anlagen zu erreichen.

Mit den konstruktiven Merkmalen der oben beschriebenen Vorrichtung zur Zwischenspeicherung von Werkstükken, respektive des Puffers, ist es nun möglich, zwei verschiedene Werkstücktypen direkt hintereinander in der Montagemaschine zu verarbeiten.

Damit der Puffer erkennen kann, von wann an ein neuer Werkstücktyp eingepuffert werden muss, sind an den Werkstückträgern kleine Kodierungsschieber angebracht. Der Kodierungsschieber besteht aus einer im Werkstückträger-Gehäuse senkrecht verschiebbaren Metallplatte. Zum Werkstücktyp A, z. B. gehört die untere Lage, zum Werkstücktyp B die obere Lage der Metallplatte. Bei Typenwechsel muss also auch die Kodierung geändert werden, was durch einen über einen Wahlschalter gesteuerten Verschieberzylinder geschieht.

Der Einpufferungsvorgang des Typs A (zuerst verarbeiteter Typ) geschieht wie oben beschrieben. Erkennt der Puffer nun einen Werkstückträger, welcher die Kodierung des Types B hat, so wird von diesem Moment an in eine andere Kassette des Kassettenblockes eingepuffert. Werden nun an der dem Puffer folgenden Maschine wieder Teile verlangt, so werden vor dem Typ B erst alle A-Typen ausgepuffert.

Eine weitere Verwendung der Vorrichtung zur Zwischenspeicherung von Werkstückträgern liegt bei der Abschnittsmontage. Gemäss Fig. 10 wird in einem Abschnittspuffer 52 ein Kassettenblock, gefüllt mit bestückten Werkstückträgern, eingeschoben. Diese Werkstückträger werden je nach Bedarf einer Montagemaschine 53 ausgepuffert und über ein Förderband 54 einem Werkstückträgerpositionierapparat 55 zur Verfügung gestellt. Der Werkstückträgerpositionierapparat 55 sorgt dafür, dass die Montagemaschine 53 im richtigen Zeitpunkt ein Werkstück in der richtigen Lage aus dem Werkstückträger entnehmen kann. Ist der Werkstückträger vollständig geleert, wird er über ein Förderband 56 in einen Puffer 57 zurückgeführt, welcher ebenfalls einen Kassettenblock enthält. Die Werkstücke werden, wenn alle Operationen erfolgt sind, durch die Montagemaschine an einen Werkstückträgerpositionierapparat 58, welcher seinerseits einen leeren Werkstückträger bereitgestellt hat, abgegeben. Diese leeren Werkstückträger kommen aus einem Puffer 59 und werden nach ihrer Beladung durch den Werkstückträgerpositionierapparat 58 in einen Puffer 60 befördert.

Patentansprüche

------------------------------------

1. Vorrichtung zur Zwischenspeicherung von Werkstückträgern, mit einem Speichermittel (6) sowie einem Hebemittel (11, 13) zum Einbringen von Werkstückträgern von einem Förderband in das Speichermittel bzw. zur Entnahme von Werkstückträgern aus dem Speichermittel und zur Verbringung derselben auf das Förderband, dadurch gekennzeichnet, dass das Speichermittel (6) als mehrere Kassetten (28) aufweisender Kassettenblock ausgebildet ist, der in einem auf einem Traggestell (5) angeordneten Rahmen (15) geführt und der mit Verriegelungsmitteln zur Arretierung der Werkstückträger versehen ist.

2. Vorrichtung nach Patentanspruch 1, dadurch gekennzeichnet, dass der Kassettenblock (6) mit vertikalen Führungsstäben (29) zur Führung der Werkstückträger versehen ist.

3. Vorrichtung nach Patentanspruch 1 oder 2, dadurch gekennzeichnet, dass die Hebemittel (11, 13) einen Hebezylinder (13) und mehrere mit dem Hebezylinder verbundene Hebefinger (11) umfassen.

4. Vorrichtung nach einem der vorangehenden Patentansprüche, dadurch gekennzeichnet, dass die Verriegelungsmittel durch Verriegelungsstangen (27) gebildet sind, die am Speichermittel angeordnet und mit Verriegelungszapfen (39) versehen sind.

5. Vorrichtung nach einem der vorangehenden Patentansprüche, dadurch gekennzeichnet, dass zur Verschiebung des Speichermittels auf dem Rahmen (15) durch einen Motor (18) angetriebene Ketten (19, 20) vorgesehen sind, die mit dem Speichermittel in Eingriff stehen.

6. Werkstückträger zur Verwendung mit der Vorrichtung nach mindestens einem der Patentansprüche 1-5, gekennzeichnet durch einen Rahmen (40) sowie mindestens ein Führungsorgan (45) zur Führung des Werkstückträgers im Speichermittel der Vorrichtung sowie durch mindestens ein Arretiermittel (44) zur Arretierung des Werkstückträgers im Speichermittel.

7. Werkstückträger nach Patentanspruch 6, gekennzeichnet durch ein Anzeigeorgan (46) zur Anzeige der Anwesenheit eines Werkstückträgers im Speichermittel.

8. Werkstückträger nach Patentanspruch 6 oder 7, gekennzeichnet durch mindestens ein am Werkstückträger vorgesehenes Kodierorgan (49) zur Anzeige des im Werkstückträger vorhandenen Werkstücktyps.

9. Werkstückträger nach Patentanspruch 8, dadurch gekennzeichnet, dass das Kodierorgan (49) als ein am Rahmen (40) des Werkstückträgers verschiebbar gelagerter, aus Metall bestehender Kodierungsschieber ausgebildet ist.

FIG. 1

FIG. 6

FIG. 2

FIG. 3

FIG. 4

FIG. 5

FIG. 9

FIG. 7

FIG. 8

FIG. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,X | CH-A- 523 831 (OMEGA LOUIS BRANDT) <br> * Spalte 2, Zeile 5 - Spalte 4, Zeile 24; Figuren * | 1,2,3, 4,5,6 | B 65 G 47/51 |
| A | DE-B-1 097 903 (DURRER) <br><br> * Patentansprüche 1,2,3,8,13; Figuren * | 1,2,3, 4 | |
| A | US-A-3 889 797 (KAZUO HAITO) <br><br> * Spalte 2, Zeile 56 - Spalte 5, Zeile 23; Figuren * | 1,2,3, 8,9 | |
| A | US-A-3 754 632 (R.C. KREUTTER) <br> * Spalte 2, Zeilen 20-60; Figuren * | 1,3 | |
| A | DE-A-2 800 570 (HAUNI WERKE KÖRBER) <br> * Patentansprüche 1,10; Seite 19, Zeile 26 - Seite 20, Zeile 13; Figuren * | 7 | **RECHERCHIERTE SACHGEBIETE (Int. Cl. 3)** <br><br> B 65 G <br> B 23 Q |
| A | FR-A-2 327 941 (ZAHNRADFAB. FRIEDRICHSHAFEN) | | |
| A | FR-A-1 459 109 (G.D.) | | |

Der vorliegende Recherchenbericht wurde für alle Patentansprüche erstellt.

| Recherchenort <br> DEN HAAG | Abschlußdatum der Recherche <br> 12-03-1984 | Prüfer <br> VAN ROLLEGHEM F.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82